Europäisches Patentamt

European Patent Office

Office européen des brevets

(11) Veröffentlichungsnummer: **0 397 974**
**A2**

## (12) EUROPÄISCHE PATENTANMELDUNG

(21) Anmeldenummer: 90104396.8

(22) Anmeldetag: 08.03.90

(51) Int. Cl.⁵: **C08J 7/04, C09D 123/26,**
**C09D 175/04, //C08L23:02**

Die Bezeichnung der Erfindung wurde geändert
(Richtlinien für die Prüfung im EPA, A-III, 7.3).

(30) Priorität: **21.03.89 DE 3909217**

(43) Veröffentlichungstag der Anmeldung:
**22.11.90 Patentblatt 90/47**

(84) Benannte Vertragsstaaten:
**BE DE ES FR GB IT NL SE**

(71) Anmelder: **BAYER AG**

**D-5090 Leverkusen 1 Bayerwerk(DE)**

(72) Erfinder: **Sirinyan, Kirkor, Dr.**
**Humperdinckstrasse 12**
**D-5060 Bergisch Gladbach 2(DE)**
Erfinder: **Dederichs, Reinhold**
**Kurt-Schumacher-Ring 86**
**D-5090 Leverkusen(DE)**
Erfinder: **Williams, John L., Dr.**
**128 Joyce Drive**
**McMurray, PA 15317(US)**

(54) **Verwendung von chemisch modifiziertem, amorphem Polyolefin als Haftvermittler in Kunststofflacken.**

(57) Ein neues Verfahren zur Lackierung von Kunststoffen unter Verwendung eines Beschichtungsmittels, welches als Haftvermittler ein chemisch modifiziertes, amorphes Polyolefin mit einer mittleren Molmasse von 10 000 bis 100 000 g/Mol, eine Uneinheitlichkeit von 1,0 bis 6,5, einem Chlorgehalt von 2,5 bis 50 Gew.-% und einem Gehalt an Stickstoff, Sauerstoff, Schwefel und/oder Silizium in Form von chemisch eingebauten funktionellen Gruppen von insgesamt 2,5 bis 15,0 Gew.-% enthält, die so erhaltenen, lackierten Kunststoffe und die Verwendung der genannten chemisch modifizierten, amorphen Polyolefine als Haftvermittler in Kunststofflacken.

EP 0 397 974 A2

**Verfahren zur Lackierung von Kunststoffen, lackierte Kunststoffe und die Verwendung von chemisch modifiziertem, amorphem Polyolefin als Haftvermittler in Kunststofflacken**

Die Erfindung betrifft ein neues Verfahren zur Lackierung von Kunststoffen unter Verwendung eines Beschichtungsmittels, welches als Haftvermittler bestimmte, chemisch modifizierte, amorphe Polyolefine, insbesondere Polypropylene enthält, die so erhaltenen lackierten Kunststoffe und die Verwendung von chemisch modifizierten, amorphen Polyolefinen als Haftvermittler in Kunststofflacken.

Zum Aufbringen von gut haftenden Lackauflagen auf Kunststoffen, insbesondere auf PP-(Polypropylen)-Spritzgußteilen ist eine chemische oder physikalische Modifizierung der Substratoberflächen erforderlich. In diesem Zusammenhang seien Beflammen (vgl. beispielsweise F. Garbassi u.a., J. Mater Sci., 22, Seiten 207 bis 212 (1987)), Coronabehandeln (vgl. beispielsweise F. Lawson, Rubber Chem. and Technol., 60, 102 (1987)), Plasmabehandeln (vgl. beispielsweise L.H. Coopes et al J. Macromol. Chem., 17, Seiten 217 bis 226 (1982) und EP-A-0.282.094), Beizen mit Chromschwefelsäure (vgl. beispielsweise M. Salkauskas J. Appl. Polym. Sci., 26, Seiten 2097 bis 2098 (1981)) erwähnt. Ferner kann der Literatur entnommen werden, daß es möglich ist, durch Verwendung von Haftvermittlerauflagen auf Basis von chlorierten Polyolefinen (US-PS 3.676.391) oder MSA-modifizierten Polyolefinen (DE-OS 1.546.982) Kunststoffteile auf Basis von Polypropylen und Polyethylenen haftfest lackierbar zu machen.

Diese Methoden sind kostenintensiv und zudem bei Spritzgußteilen mit komplizierter Geometrie nicht anwendbar. Das Aufbringen von besagten Haftvermittlerauflagen ist neben den hohen Händlingskosten wegen des niedrigen Festkörpergehalts noch zusätzlich mit Umweltproblemen verbunden. Darüber hinaus ist ihre Anwendung auf bestimmte Lacksysteme beschränkt.

In der PCT-Anmeldung mit der Veröffentlichungsnummer WO 88/05346 wird vorgeschlagen, die Haftvermittlerauflagen mittels zusätzlicher Maßnahmen wie UV-Bestrahlung zu modifizieren, was auf einen zusätzlichen Aufwand hinausläuft.

Ein Beimengen von chlorierten Polyolefinen zu den Kunststofflacken, beispielsweise von herkömmlichen, chlorierten Polypropylenen, wie es in US-PS 2.468.480 empfohlen wird, ist mit dem Nachteil verbunden, daß solche chlorierten Polyolefine mit den üblichen Kunststofflacken nur schlecht verträglich sind. Ferner ist ihre Löslichkeit in üblichen Lacklösungsmitteln sehr gering, was die praktische Verarbeitbarkeit negativ beeinträchtigt.

Es war daher die der Erfindung zugrundeliegende Aufgabe, ein neues Verfahren zur Lackierung von Kunststoffen zur Verfügung zu stellen, welches sich aufgrund der Verwendung von neuartigen Haftvermittlern zur Herstellung von hochwertigen Lacküberzügen eignet, ohne mit den Nachteilen der genannten Verfahren des Standes der Technik behaftet zu sein.

Diese Aufgabe konnte durch die Bereitstellung des nachstehend näher beschriebenen erfindungsgemäßen Verfahrens bzw. die erfindungsgemäße Verwendung der nachstehend näher beschriebenen erfindungsgemäßen Haftvermittler gelöst werden.

Gegenstand der Erfindung ist ein Verfahren zur Lackierung von Kunststcffen unter Verwendung eines Beschichtungsmittels, welches neben einem Ein- oder Zweikomponenten-Bindemittel mindestens einen Haftvermittler, sowie gegebenenfalls weiterer Hilfs- und Zusatzmittel enthält, dadurch gekennzeichnet, daß man als Haftvermittler ein chemisch modifiziertes, amorphes Polyolefin mit einer mittleren Molmasse $M_w$ (Gewichtsmittel) von 10 000 bis 100 000 g/Mol, einer Uneinheitlichkeit $U_n$ von 1,0 bis 6,5, einem Chlorgehalt von 2,5 bis 50 Gew.-% und einem Gehalt an Stickstoff, Sauerstoff, Schwefel und/oder Silicium in Form von chemisch eingebauten funktionellen Gruppen von insgesamt 2,5 bis 15,0 Gew.-% verwendet.

Gegenstand der Erfindung sind auch die so erhaltenen, lackierten Kunststoffe.

Gegenstand der Erfindung ist schließlich auch die Verwendung von chemisch modifizierten, amorphen Polyolefinen einer mittleren Molmasse von 10 000 bis 100 000 g/Mol, einer Uneinheitlichkeit von 1,0 bis 6,5, einem Chlorgehalt von 2,5 bis 50 Gew.-% und einem Gehalt an Stickstoff, Sauerstoff, Schwefel und/oder Silicium in Form von chemisch eingebauten funktionellen Gruppen von insgesamt 2,5 bis 15 Gew.-% als Haftvermittler in Kunststofflacken.

Bei den erfindungswesentlichen Haftvermittlern handelt es sich um chemisch modifizierte, chlorhaltige amorphe Polyolefine, vorzugsweise chemisch modifizierte, amorphe Polypropylene mit einer mittleren, gelpermeations-chromatographisch ermittelbaren Molmasse Mw 10 000 bis 100 000, vorzugsweise 15 000 bis 60 000 und besonders bevorzugt 17 000 bis 40 000 g/Mol, mit der Uneinheitlichkeit 1,0 bis 6,5, vorzugsweise 1,5 bis 4,5, mit einem Gehalt an chemisch gebundenem Chlor von 2,5 bis 50, vorzugsweise 15 bis 40 Gew.-%, ganz besonders bevorzugt 20 bis 35 Gew.-%, und einem Gehalt an Stick stoff, Sauerstoff, Schwefel und/oder Silicium in Form von diese Elemente aufweisenden funktionellen Gruppen von insgesamt 2,5 bis 15, vorzugsweise 2,5 bis 7,5 Gew.-%. Insbesondere diese funktionellen Gruppen sind für die ausgezeichnete Verträglichkeit der erfindungsgemäßer Additive mit den herkömmlichen Lacksystemen bzw. die gute Löslichkeit in herkömmlichen Lacklösungsmitteln verantwortlich. Außerdem wird durch diese funktionellen Gruppen eine gute physikalische Fixierung des Additivs in der Lackmatrix gewährleistet.

Gut geeignete funktionelle Gruppen sind beispielsweise Amino-, Carboxyl-, Carbonsäureanhydrid-, Carbonsäureester-, Carbonsäureamid-, Carbonsäureimid-, Aldehyd-, Keton-, Sulfonsäureester-, Hydroxy-, Hydroperoxid- oder Alkoxysilangruppen oder auch heterocyclische Gruppierungen wie Imidazol-, Carbazol- oder Pyridinylgruppen oder schließlich auch aktivierte Doppelbindungen wie Vinylsulfonyl-oder Vinylaminogruppen, sowie schließlich auch Mercaptogruppen. Ganz besonders gut geeignete funktionelle Gruppen sind Hydroxyl-, Hydroperoxy-(H-O-O-), Carboxyl-, Carbonsäureanhydrid-, Carbonsäureamid-, Carbonsäureimid-, Carbonsäureester-, Amino- und Alkoxysilan-, vorzugsweise Trimethoxysilangruppen.

Bezüglich der Eignung der beispielhaft genannten funktionellen Gruppen ist lediglich darauf zu verweisen, daß diese unter üblichen Lagerungsbedingungen bei Anwesenheit von Luftsauerstoff, Feuchtigkeit und erhöhten Temperaturen bis 120°C keine Reaktionen mit sich selbst oder mit den Lackkomponenten eingehen dürfen, mit denen sie abgemischt werden.

Zur Herstellung der chemisch modifizierten Haftvermittler werden als Ausgangsmaterialien vorzugsweise amorphe Polypropylene oder Polyethylene der Molmasse 10 000 bis 120 000 g/Mol und der Uneinheitlichkeit 1,0 bis 7,5 eingesetzt. Es ist jedoch auch möglich, als "Polyolefine" entsprechende amorphe Copolymerisate des Propylen mit anderen olefinisch ungesättigten Monomeren wie beispielsweise Ethylen, Isopren, Butadien-1,2 und/oder Butadien-1,4 einzusetzen, wobei diese Monomeren in Mengen von bis zu 25 Gew.-%, bezogen auf das Gewicht aller Monomeren zum Einsatz gelangen können.

Die Einführung von Chlor erfolgt in an sich bekannter Weise durch Chlorierung der als Ausgangsmaterial dienenden amorphen Polyolefine (vgl. hierzu Houben-Weyl, Methoden der organischen Chemie, Band V/3, Seiten 511-551, Georg Thieme Verlag, Stuttgart (1962). Zur Herstellung der erfindungsgemäßen Additive wird die Chlorierung bei Temperaturen von ca. -10°C bis zum jeweiligen Siedepukt des eingesetzten Lösungsmittels vorgenommen.

Der Einbau der funktionellen Gruppen kann durch Umsetzung mit herkömmlichen Peroxiden (Einbau von Hydroperoxid- oder Carboxylgruppen) bzw. durch radikalisch initiierte Pfropfreaktion mit Monomeren, die erfindungsgemäße funktionelle Gruppen aufweisen, vorgenommen werden. Als Initiator für diese Pfropfreaktion können Peroxide oder Azoverbindungen der hierfür an sich bekannten Art verwendet werden. Die Modifizierungsreaktionen sind an sich bekannt und werden beispielsweise in folgenden Literaturstellen beschrieben: G.A. Russel, J. Am. Chem Soc., 79, 3871 (1957), M. Iring et al., Polymer Degradation and Stability, 5, 467 (1983), N.G. Gaylord, Journal of Polymer Science, Polymer Letters Edition, Vol. 21, 23-30 (1983), A Neyishi et al, J. of Appl. Poly. Sci. 22, 2953 (1978), A. Hoff, J. of Appl. Poly. Sci., 29, 465 (1984).

Geeignete Initiatoren sind beispielsweise Kaliumperoxodisulfat, Azo-bisisobutyronitril, t-Butylperbenzoat, t-Amyl-perneodecanoat, p-Benzodinen, t-Butyl-perisononanoat, Di-2-ethylhexyl-peroxydicarbonat oder Di-n-butyl-peroxydicarbonat.

Geeignete Monomere mit funktionellen Gruppen wären beispielsweise Allylamin, Allylalkohol, Trimethoxyvinylsilan, Triethoxyvinylsilan, Ethylallylether, Cyclohexen-1-dicarbonsäureanhydrid-4, Maleinsäureanhydrid, Maleinsäuredimethyl-, -diethyl-, -dipropyl- und -dibutylester bzw. deren Säureamide wie Maleinsäurediethylamid usw., n-Alkyl-Maleinsäureimide beispielsweise n-Propyl-Maleinsäureimid oder n-Butyl-Maleinsäureimid, Fumarsäure, Fumarsäuredimethyl-, -diethyl-, -dipropyl- bzw. -dibutylester bzw. deren Säureimide oder -amide, 3-Trimethoxysilyl-1-Chlorpropan, N[2-(Trimethoxysilyl)ethyl]ethylendiamin, 3-Trimethoxysilyl-1-chlorpropan, Mercaptoethyl-, Mercaptopropyl-, Mercaptobutyltrimethoxy bzw. -triethoxysilan, ferner Vinylencarbonat, Vinylsulfon, 3-Trimethoxysilyl-propyl-1-imidazol bzw. -carbazol. Die geeigneten Monomeren sind im allgemeinen solche, die mit den Polyolefinen nicht zu Blockcopolymerisaten reagieren.

Der Einbau von funktionellen Gruppen kann sowohl in der Schmelze mittels Extrudern oder anderen üblichen Spritzgußtechniken bei Temperaturen von ca. 140°C bis 300°C, vorzugsweise jedoch bei Temperaturen oberhalb des Schmelzbereichs der jeweils eingesetzten Polyolefine (vgl. hierzu G.M. Gale, Applied Organometallic Chemistry, 2, Seiten 17-31 (1988)) oder in einem geeigneten Lösungsmittel (vgl. hierzu DE-OS 1 546 982) vorgenommen werden. Zum Einbau von funktionellen Gruppen in Lösung wird die Pfropfreaktion im allgemeinen bei erhöhten Temperaturen von ca. 40°C bis zum jeweiligen Siedepunkt des Lösungsmittels vorgenommen. Geeignete Lösungsmittel sind beispielsweise Xylol, Tetrachlorkohlenstoff, Toluol, Chlorbenzol, Tetralin, Kresol oder Gemische derartiger Lösungsmittel.

Die Reihenfolge der Reaktionen (Chlorierung bzw. Einbau der funktionellen Gruppen) ist unwesentlich.

Die erfindungswesentlichen Additive werden vorzugsweise lösungsmittelhaltigen Kunststofflakken als haftvermittelnde Zusätze einverleibt und zwar in Mengen von 0,1 bis 15 Gew.-%, vorzugsweise 1 bis 10 Gew.-% und besonders bevorzugt 2 bis 5 Gew.-%, bezogen auf das Gewicht der lösungsmittelfreien Bindemittel.

Bei diesen Beschichtungsmitteln handelt es sich beispielsweise um solche, die als Bindemittel Ein- oder Zweikomponenten-Polyurethansysteme, Melaminharze, gesättigte oder ungesättigte Polyesterharze, Alkydharze, Nitrocellulose, Kautschuktypen oder Polyamidharze enthalten. Vorzugsweise handelt es sich bei diesen Beschichtungsmitteln um lösungsmittelhaltige Lacke, die die üblichen Lacklösungsmittel wie beispielsweise Butylacetat, Methylethylketon, Methylisobutylketon, Methoxypropylacetat, Toluol, Xylol oder beliebige Gemische derartiger Lösungsmittel enthalten. Grundsätzlich geeignet ist jedoch auch die Verwendung von lösungsmittelarmen oder lösungsmittelfreien bzw. von wäßrigen Beschichtungsmitteln, in denen die erfindungswesentlichen Haftvermittler in den oben angegebenen Mengen vorliegen. Geeignete Beschichtungsmittel sind beispielsweise in H. Kittel, Lehrbuch der Lacke und Beschichtungen, Band IV, Seiten 76 bis 306, Verlag W.A. Colomb (1986) oder in dem gleichen Lehrbuch, Ausgabe 1976, Band IV, Seiten 328 bis 358 beschrieben.

Besonders bevorzugt handelt es sich bei den Beschichtungsmitteln um Ein- und insbesondere Zweikomponenten-Polyurethansysteme der an sich bekannten Art.

Geeignete Einkomponenten-Polyurethanlacke sind beispielsweise solche auf Basis von überwiegend linearen, voll ausreagierten Polyurethanen die in organischen Lacklösungsmitteln der beispielhaft genannten Art löslich sind und keine reaktive Zentren mehr aufweisen, d.h. die physikalisch trocknen (siehe z.B. Kunststoff-Handbuch, Band 7 "Polyurethane", herausgegeben von Günter Oertel, Carl Hanser Verlag München/Wien (1983), Seite 551). Geeignete physikalisch trocknende Lacke dieses Typs sind beispielsweise jene deren Binder auf einem ausreagierten linearen Polyurethan aus (i) einem Polyesterdiol, (ii) einem Kettenverlängerungsmittel und (iii) einem Diisocyanat basieren. Geeignete Polyesterdiole (i) zur Herstellung solcher Polyurethane sind beispielsweise Adipinsäure-Alkandiol-Polyesterdiole des Molekulargewichtsbereichs 600 bis 3000. Bei den Alkandiolen handelt es sich beispielsweise um Butandiol-1,4, Hexandiol-1,6, Neopentylglykol oder Mischungen derartiger Glykole. Geeignete Kettenverlängerungsmittel (ii) sind beispielsweise Diole der zur Herstellung der Polyesterdiole eingesetzten Art und auch Diamine wie Hexamethylendiamin oder Isophorondiamin. Geeignete Diisocyanate (iii) sind beispielsweise 4,4'-Diisocyanatodiphenylmethan oder Isophorondiisocyanat. Die Polyurethane werden in an sich bekannter Weise durch Umsetzung der Ausgangsmaterialien hergestellt, wobei ein Äquivalentverhältnis von Isocyanatgruppen gegenüber Isocyanatgruppen reaktionsfähiger Gruppen von ca 0,9:1 bis 1,1:1 eingehalten wird.

Bei den besonders bevorzugten Zweikomponenten-Polyurethanlacken handelt es sich um solche, deren Bindemittel ein Zweikomponenten-Polyurethansystem darstellt wie sie beispielsweise in dem zuletzt zitierten Handbuch auf Seiten 541 bis 544 beschrieben werden. Die Zweikomponenten-Bindemittel dieser Lacke bestehen im allgemeinen aus einer Polyisocyanatkomponente und einer Polyolkomponente, wobei die Mengen dieser Komponenten einem molaren NCO/OH-Verhältnis von 0,5:1 bis 2:1, vorzugsweise 0,8:1 bis 1,5:1 entsprechen. Geeignete Polyisocyanate sind die bekannten Lackpolyisocyanate, beispielsweise Biuret-, Isocyanurat- oder Urethan-modifizierte Derivate einfacher Diisocyanate wie 2,4-Diisocyanatotoluol oder seine Mischungen mit 2,6-Diisocyanatotoluol und insbesondere 1,6-Diisocyanatohexan, wobei die genannten Derivate im allgemeinen 10 bis 25 Gew.-% Isocyanatgruppen enthalten.

Geeignete Polyole sind insbesondere Polyesterpolyole, Polyetherpolyole oder Polyacrylatpolyole.

Die Polyesterpolyole haben im allgemeinen ein Molekulargewicht von 500 bis 5000 und weisen mindestens 2, vorzugsweise 2 bis 6 Hydroxylgruppen pro Molekül auf.

Die Polyetherpolyole haben im allgemeinen ein Molekulargewicht von 500 bis 5000 und weisen 2 bis 3 Hydroxylgruppen pro Molekül auf.

Die Acrylatpolyole haben ein Molekulargewicht von 500 bis 5000 und enthalten im allgemeinen 1 bis 12 Gew.-% Hydroxylgruppen.

Zur Erhöhung der Verträglichkeit der erfindungsgemäßen Haftvermittler in Lacklösungsmitteln können diese zusätzlich mit neutralen, kationischen oder anionischen Tensiden versetzt werden. Die Menge der Tenside kann im Bereich von 0,1 bis 2,5 Gew.-%, vorzugsweise von 0,1 bis 1,0 Gew.-%, bezogen auf den Gesamtfeststoff der zur Anwendung gelangenden Beschichtungsmittel, variiert werden. Bevorzugte Tenside sind neutrale oligomere oder polymere Verbindungen auf Basis von ethoxylierten Alkanolen mit 5 bis 18, vorzugsweise 5 bis 15, Kohlenstoffatomen im Alkylrest des Alkohols und einem Ethoxilierungsgrad von 1 bis 40. Ebenfalls geeignet sind jedoch Tenside auf Basis von Ölsäure-Ammoniumsalzen wie beispielsweise dem Ölsäure-diethylammoniumsalz, auf Basis von Alkali-alkylsulfonaten, insbesondere Natrium-alkylsulfonaten mit 5 bis 18 Kohlenstoffatomen im Alkylrest, auf Basis von Alkali- vorzugsweise Natriumsalzen von Alkybenzolsulfonsäuren mit 5 bis 18 Kohlenstoffatomen im Alkylrest, auf Basis von Dibutylnaphthalinsulfonaten, von Laurylalkoholsulfat oder auf Basis von Dioctylglycerinethersulfat.

Die zur Anwendung gelangenden Beschichtungsmittel können im übrigen weitere Hilfs- und Zusatzmittel wie Katalysatoren, Pigmente, die bereits erwähnten Lösungsmittel, Verlaufhilfsmittel, Füllstoffe usw. enthalten.

Die Hilfs- und Zusatzmittel, insbesondere die erfindungsgemäßen Haftvermittler werden im Falle der Verwendung in Zweikomponenten-Polyurethanlacken im allgemeinen der Polyolkomponente zugemischt.

Die Beschichtungsmittel, die die erfindungswesentlichen Haftvermittler enthalten, eignen sich ausgezeichnet zur Beschichtung von thermoplastischen oder duroplastischen Kunststoffen der unterschiedlichsten Art. Sie eignet sich insbesondere zur Beschichtung von oftmals nicht ohne weiteres haftfest lackierbaren Polyolefinen einer Oberflächenspannung von mindestens 35 mN/m. Solche Polyolefine sind beispielsweise modifizierte und unmodifizierte teilkristalline oder amorphe Polypropylene und Polyethylene. Besonders bevorzugte Substrate für die erfindungsgemäßen Beschichtungsmittel sind Formkörper aus Polypropylen. Daneben sind beispielhaft auch Polyvinylidenfluorid, Polytetrafluorethylen, Ethylen-Propylen-Norbordien-Kunststoffe, Acrylnitril-Butadien-Styrol-Copolymerisate, Polycarbonate, Polyamidkunststoffe, Polyester-, Polybutadien-, Polysilikone oder Zelluloseester als geeignete Substrate zu nennen. Die mit den erfindungswesentlichen Haftvermittlern versehenen Beschichtungsmittel werden bei der Durchführung des erfindungsgemäßen Verfahrens im allgemeinen unter Einhaltung einer Trockenfilmstärke von 0,5 bis 100, vorzugsweise 20 bis 50 µm appliziert, wobei beliebige Methoden der Kunststofflackierung zur Anwendung gelangen können.

Im Falle einer Mehrschichtlackierung enthält selbstverständlich der Grundlack das erfindungswesentliche Additiv, während die Verwendung gleicher oder analoger Additive in den übrigen Lackschichten fakultativ ist. Hiermit kann jedoch eine verbesserte Lackzwischenhaftung erzielt werden. Auch den nicht unmittelbar mit dem zu beschichtenden Kunststoff in Berührung kommenden Lackschichten werden in einem solchen Falle die Haftvermittler in den oben angegebenen Mengen zugesetzt.

Die erfindungsgemäß lackierten Kunststoffe können in den unterschiedlichsten Bereichen des täglichen Bedarfs zur Anwendung gelangen. Beispielhaft genannt seien der Automobilinnen- und -außenbereich, Elektro- und Elektronikgeräte, sowie Haushaltsgeräte der unterschiedlichsten Art.

Beispiel 1

100 g amorphes Polypropylen mit der mittleren Molmasse Mw 60 000 g/Mol werden in 2000 g Tetrachlorkohlenstoff gelöst, anschließend werden der Lösung 12 g Trimethoxyvinylsilan und 1 g t-Butylperbenzoat bei 70°C im Verlaufe von einer Stunde unter $N_2$ zugetropft, die Lösung auf 10°C abgekühlt und unter fortwährender UV-Bestrahlung reines Chlor eingeleitet, bis die weitere Gewichtsaufnahme 48 g beträgt. Das so modifizierte Polymere wird dann in 5000 g Ethanol ausgefällt, 5 mal mit reinem Ethanol nachgewaschen und über Nacht getrocknet. Man erhält ein Additiv mit der mittleren Molmasse von ca. 40 000 g/Mol. Es enthält 5 Gew.-% Sauerstoff und 2,2 Gew.-% Silizium bzw. 30 Gew.-% Chlor. Es ist in Xylol, Toluol, Butylacetat usw. löslich und zeichnet sich durch ihre hervorragende Verträglichkeit in üblichen Kunststoff-Lacklösungen aus.

Eine 100 x 100 mm große, handelsübliche, modifizierte Polypropylenplatte der Fa. Hoechst AG des Typs ®Hostalen PPN 8018 wird durch Abblasen mit ionisierter Luft entladen und von Staubpartikeln befreit und dann mittels Spritzauftrag mit einem Zweikomponenten-Polyurethanlack beschichtet.

Die Komponente I des Beschichtungsmittels bestand aus einem Gemisch aus

100 Gew.-Teilen eines hydroxylgruppen aufweisenden Polyacrylatharzes mit einem Hydroxylgruppengehalt von 2,8 Gew.-% (®Desmophen A 365 der Bayer AG),

20 Gew.-Teilen einer 25 gew.-%igen xylolischen Lösung des obengenannten Zusatzmittels,

49,3 Gew.-Teilen Talkum

3,2 Gew.-Teilen Schwarzpigment (Ruß),

65,6 Gew.-Teilen Titandioxidpigment (Rutil),

4,8 Gew.-Teilen einer 10 %igen Lösung in Xylol eines handelsüblichen Schwebemittels (®Bentone der Fa. Kronos Titan GmbH, D-5090 Leverkusen) und

155 Gew.-Teilen eines Lösungsmittels, bestehend aus einem Gemisch aus Butylacetat und Xylol im Gewichtsverhältnis 1:1.

Die Komponente II des Beschichtungsmittels bestand aus einer 75 %igen Lösung in 1-Methoxypropylacetat-2/Xylol (1:1) eines Biuretpolyisocyanats auf Basis von 1,6-Diisocyanatohexan mit einem NCO-Gehalt der Lösung von 16,5 Gew.-% (®Desmodur N 75 der Bayer AG).

Nach erfolgter Applikation des Lacks wird während 10 Minuten abgelüftet und bei 70°C getrocknet.

Es resultiert eine Beschichtung mit der Lackhaftung gemäß DIN 53 151 Gt. 0.

Vergleichsbeispiel 1

Eine Wiederholung von Beispiel 1 ohne Verwendung des erfindungswesentlichen Zusatzmittels führt zu einer Lackauflage mit einem Haftwert gemäß DIN 53 151 von Gt 5. Die Lackauflage kann problemlos von der Oberfläche entfernt werden.

Beispiel 2

Eine 100 x 100 mm große rußgefüllte und glasfaserverstärkte Polypropylenplatte der Fa. Hoechst AG wird nach Beispiel 1 mit einer Lackauflage versehen.

Man bekommt eine lackierte Platte mit einer hervorragenden Lackhaftung. Die Lackauflage weist einen Haftwert nach DIN 53 151 GT 0 auf und besteht problemlos sowohl den Witterungstest gemäß DIN 50 017-KK als auch den Temperaturwechseltest gemäß ASTM D 1211.

Vergleichsbeispiel 2

Beispiel 2 wird wiederholt jedoch ohne Mitverwendung des erfindungswesentlichen Haftmittels. Die Haftung der Lackauflage beträgt Gt 5. Der Lack kann problemlos von der Lackoberfläche entfernt werden.

Beispiel 3

100 g amorphes Polypropylen mit der mittleren Molmasse Mw 100 000 g/Mol werden in 2000 g Tetrachlorkohlenstoff gelöst. Anschließend werden der Lösung 5 g Azobisisobutyronitril in 100 ml Tetrachlorkohlenstoff bei 75° C im Verlaufe von 120 Minuten zugetropft und 3 Stunden bei 75° C gerührt.

Anschließend wird in die Lösung während eines Zeitraums von 60 Minuten unter UV-Bestrahlung bei 0° C Chlorgas eingeleitet, bis die weitere Gewichtszunahme 21,8 g beträgt. Dann wird der Tetrachlorkohlenstoff durch reines Xylol ausgetauscht. Man erhält eine klare Polymerlösung. Der Feststoffgehalt der Lösung liegt bei 25 Gew.-%. Das modifizierte Polypropylen weist einen Gehalt an Sauerstoff von 3,5 Gew.-% in Form von Hydroxyl-, Hydroperoxy-, Carboxyl- und Chlorcarbonylgruppen und außerdem 17,5 Gew.-% chemisch gebundenes Chlor auf.

Eine 100 x 100 cm große Polypropylenplatte wird mittels Druckauftrag mit einem Zweikomponenten-Polyurethanlack unter Einhaltung einer Trockenfilmstärke von ca. 15 µm beschichtet.

Die Komponente I des Beschichtungsmittels bestand aus einer Mischung aus
100 Gew.-Teilen eines Polyesterpolyols mit einem Hydroxylgruppengehalt von 2,7 % (®Desmophen A 565 der Bayer AG),
10 Gew.-Teilen der obengenannten Lösung des erfindungswesentlichen Additivs
50 Gew.-Teilen Talkum
3,7 Gew.-Teilen Schwarzpigment
65,6 Gew.-Teilen Titandioxidpigment (Rutil) und
4,8 Gew.-Teilen der bereits in Beispiel 1 genannten Lösung des Schwebemittels.

Die Komponente II des Beschichtungsmittels bestand aus 40 Gew.-Teilen der bereits in Beispiel 1 genannten Lösung eines Biuretpolyisocyanats.

Nach Ablüftung und Trocknung wie in Beispiel 1 beschrieben resultiert eine Beschichtung mit der Lackhaftung Gt 0.

Aus weiteren Untersuchungen geht hervor, daß das verwendete Additiv auch bei mehrmonatiger Lagerung die Eigenschaften der Lackkomponente I nicht negativ beeinflußte. Ebenso blieb die Topfzeit der Lacklösung unverändert.

Vergleichsbeispiel 3

Eine Wiederholung von Beispiel 3 jedoch ohne Mitverwendung des erfindungswesentlichen Additivs führt zu einer Lackhaftung von Gt 5.

Beispiel 4

100 g amorphes Polypropylen mit der mittleren Molmasse von 40 000 g/Mol wird nach G.M. Gale, Applied Organometallic Chemistry, 2, 17 (1988) mit N-[2-(Trimethoxysilyl)-ethyl]-ethylendiamin modifiziert. Anschließend wird das so modifizierte Polypropylen mit 3 g Di-2-ethylhexyl-peroxidicarbonat in 50 g CCl₄ bei 70° C unter N₂ versetzt und dann unter UV-Bestrahlung bei 0° C chloriert und anschließend in Ethanol ausgefällt bzw. über Nacht bei 80° C unter Vakuum getrocknet. Man erhält ein Additiv der mittleren Molmasse von 22 000 g/Mol mit einem Gehalt an Stickstoff von 1,4 Gew.-%, an Sauerstoff von 4,5 Gew.-%, an Silizium von 1,4 Gew.-% und an Chlor von 24,8 Gew.-%. Es ist sowohl in polaren Lösemitteln wie in Butylacetat als auch in unpolaren Lösemitteln löslich und zeichnet sich durch gute Verträglichkeit und Mischbarkeit in herkömmlichen Lacken aus.

Ein Zweikomponenten-Polyurethanlack gemäß Beispiel 1, der jedoch anstelle des dort verwendeten Additivs 3,5 Gew.-% des obengenannten Additivs enthält führt nach Verarbeitung gemäß Beispiel 1 unter Beschichtung einer Polypropylenplatte zu einer Beschichtung der Lackhaftung Gt 0.

### Beispiel 5

50 g amorphes Polypropylen mit der mittleren Molmasse von 30 000 g/Mol werden in 1000 g Toluol gelöst, dann werden der Lösung 7,5 g Allylamin in 75 g Toluol und 1,0 g t-Amyl-perneodecanoat in 50 g Toluol im Verlauf von 2 Stunden bei 80° C unter $N_2$ zugetropft. Anschließend wird das Lösemittel dem Polymeren unter Vakuum entzogen. Das Polymere wird in 250 g $CCl_4$ gelöst und bei 0° C mittels UV-Bestrahlung chloriert.

Man erhält ein modifiziertes Additiv, welches 3 Gew.-% Stickstoff, 2 Gew.-% Sauerstoff und 18 Gew.-% Chlor aufweist. Es ist in gängigen Lacklösungen bzw. Lacklösemitteln gut löslich.

Ein Ersatz des in Beispiel 1 eingesetzten Additivs durch 2 Gew.-% des obigen Additivs führt ebenfalls zu einer Beschichtung mit der Lackhaftung Gt 0.

### Beispiel 6

Amorphes Polypropylen (250 g) mit der mittleren Molmasse von 90 000 g/Mol werden nach N.G. Gaylord, J. Polym. Sci., Polym. Lett. Ed., 21, Seiten 23-30 (1983) mit Maleinsäureanhydrid modifiziert, in 5000 g $CCl_4$ gelöst und dann bei UV-Bestrahlung unter $N_2$ chloriert anschließend in Ethanol ausgefällt. Man erhält ein

$$- \overset{O}{\overset{\|}{C}} - O - \overset{O}{\overset{\|}{C}} -$$ und -$CH_2$-O-OH-Gruppen aufweisendes Polypropylen mit 5,8 Gew.-% $O_2$, 10 Gew.-% $Cl_2$ und der mittleren Molmasse 40 000 g/Mol.

Eine 25 gew.-%ige Lösung des oben angegebenen Additivs in Xylol wird dem Lack gemäß Beispiel 1 anstelle des dort verwendeten Additivs beigemengt. Eine mit diesem Lack beschichtete Polypropylenplatte weist eine Lackauflage der Haftung Gt 0 auf.

### Beispiel 7

Eine nach Beispiel 1 lackierte Polypropylenplatte wird mit einem elastischen Zweikomponenten-Polyurethandecklack einer Trockenfilmschichtdicke von ~20 $\mu$m versehen.

Die Komponente I des elastischen Decklacks bestand aus einem Gemisch aus 15,1 Gew.-Teilen eines Hydroxylgruppen aufweisenden Polyesterharzes mit einem Hydroxylgruppengehalt von 4,3 Gew.-% (®Desmophen 670 der Bayer AG), 18,5 Gew.-Teilen eines Hydroxylgruppen aufweisenden Polyacrylatharzes mit einem Hydroxylgruppengehalt von 2,8 Gew.-% (®Desmophen A 365 der Bayer AG), 0,8 Gew.-Teilen Dabco (1,4-Diaza-bicyclo-(2,2,2)-octan)-Lösung (10 %ig in Butylacetat), 3,8 Gew.-Teilen ®Tinuvin 292, ein UV-Schutzmittel der Ciba Geigy AG (10 %ig in Xylol), 22,8 Gew.-Teilen Bayertitan des Typs R-KB 4 ($TiO_2$ der Bayer AG), 3,8 Gew.-Teilen einer 10 %igen Lösung in Xylol eines handelsüblichen Schwebemittels (®Bentone der Fa. Kronos Titan GmbH) und 16,6 Gew.-Teilen einer 30 gew.-%igen xylolischen Lösung des im Beispiel 1 angegebenen Zusatzmittels.

Die Komponente II des Beschichtungsmittels bestand aus einer 75 %igen Lösung in 1-Methoxypropylacetat-2/Xylol (1:1) eines Biuretpolyisocyanats (®Desmodur N 75 der Bayer AG, vgl. Beispiel 1).

Nach erfolgter Applikation des Lackes wird während 20 Minuten abgelüftet und bei 80° C getrocknet.

Es resultiert eine optisch einwandfreie, durchsichtige Beschichtung mit der Lackhaftung gemäß DIN 53 151 Gt.0.

## Ansprüche

1. Verfahren zur Lackierung von Kunststoffen unter Verwendung eines Beschichtungsmittels, welches neben einem Ein- oder Zweikomponenten-Bindemittel mindestens einen Haftvermittler, sowie gegebenenfalls weiterer Hilfs- und Zusatzmittel enthält, dadurch gekennzeichnet, daß man als Haftvermittler ein chemisch modifiziertes, amorphes Polyolefin mit einer mittleren Molmasse von 10 000 bis 100 000 g/Mol, einer Uneinheitlichkeit von 1,0 bis 6,5, einem Chlorgehalt von 2,5 bis 50 Gew.-% und einem Gehalt an Stickstoff, Sauerstoff, Schwefel und/oder Silicium in Form von chemisch eingebauten funktionellen Gruppen von insgesamt 2,5 bis 15,0 Gew.-% verwendet.

2. Verfahren gemäß Anspruch 1, dadurch gekennzeichnet, daß man als chemisch modifiziertes, amorphes Polyolefin ein chemisch modifiziertes, amorphes Polypropylen verwendet.

3. Verfahren gemäß Anspruch 1 und 2, dadurch gekennzeichnet, daß man als Beschichtungsmittel ein solches verwendet, welches als Bindemittel ein Zweikomponenten-Polyurethansystem enthält.

4. Verfahren gemäß Anspruch 1 bis 3, dadurch gekennzeichnet, daß es sich bei dem zu lackierenden Substrat um amorphes oder teilkristallines, gegebenenfalls modifiziertes Polypropylen oder Polyethylen handelt.

5. Gemäß Anspruch 1 bis 4 lackierte Kunststoffe.

6. Verwendung von chemisch modifizierten, amorphen Polyolefinen einer mittleren Molmasse von 10 000 bis 100 000 g/Mol, einer Uneinheitlichkeit von 1,0 bis 6,5, einem Chlorgehalt von 2,5 bis 50 Gew.-% und einem Gehalt an Stickstoff, Sauerstoff, Schwefel und/oder Silicium in Form von chemisch eingebauten funktionellen Gruppen von insgesamt 2,5 bis 15 Gew.-% als Haftvermittler in Kunststofflacken.

7. Verwendung gemäß Anspruch 6, dadurch gekennzeichnet, daß es sich bei dem chemisch modifizierten, amorphen Polyolefin um ein chemisch modifiziertes, amorphes Polypropylen handelt.